Europäisches Patentamt

European Patent Office

Office européen des brevets

(11) Veröffentlichungsnummer: **0 474 114 A2**

## EUROPÄISCHE PATENTANMELDUNG

(21) Anmeldenummer: **91114522.5**

(22) Anmeldetag: **29.08.91**

(51) Int. Cl.5: **F16L 33/26**

(30) Priorität: **01.09.90 DE 4027818**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **KE ROHRSYSTEME UND UMWELTTECHNIK GmbH**
**Kabelkamp 20, Postfach 3263**
**W-3000 Hannover 1(DE)**

(72) Erfinder: **Bittner, Herbert**
**Bethlehemplatz 4**
**W-3000 Hannover 1(DE)**

(54) **Verfahren zum Befestigen einer Anschlussarmatur am Ende eines schraubenlinienförmig gewellten Metallrohres.**

(57) Bei einem Verfahren zum Befestigen einer Anschlußarmatur an dem Ende eines schraubenlinienförmig gewellten Metallrohres, bei dem auf das Ende des Wellrohres eine Hülse aufgeschraubt, anschließend einige der Wellengänge vom Wellrohrende her gestaucht und die Hülse mit einer in das Wellrohrende mit einem Ansatz eindringenden Büchse verbunden wird, wird in zumindest zwei Wellengänge ein Dichtungselement eingebracht und das Dichtungselement beim Stauchen der Wellung verformt und gegen die Innenwandung der Hülse und den in das Wellrohrende eingedrungenen Ansatz der Büchse gepreßt.

EP 0 474 114 A2

Die Erfindung betrifft ein Verfahren zum Befestigen einer Anschlußarmatur am Ende eines schraubenförmig gewellten Metallrohres, bei dem auf das Ende des Wellrohres eine Hülse mit einem an der inneren Oberfläche angebrachten, der Steigung der Wellung des Wellrohres angepaßten Gewindegang aufgeschraubt, anschließend einige der Wellengänge vom Wellrohrende her gestaucht und die Hülse mit einer in das Wellrohrende mit einem Ansatz eindringenden Büchse verbunden wird.

Aus der DE-AS 11 58 778 ist eine Befestigung eines metallischen Wellrohres in einem metallischen Anschlußstück bekannt, bei dem die Abdichtung durch axiales Zusammenpressen der Endwellen des Wellrohres bewirkt wird. Auf das Wellrohrende ist eine Hülse mit einem inneren Gewindegang aufgeschraubt, die einen zum Wellrohrende hinweisenden Ansatz aufweist. Weiterhin ist eine Büchse vorgesehen, die mit einem Ansatz in das Wellrohrende eindringt und einen Flansch aufweist, der den Ringspalt zwischen den beiden Ansätzen überdeckt. Das Stauchen der Wellung erfolgt nach dem Aufschrauben der Hülse. Nach dem Einbringen des Büchsenansatzes in das Wellrohrende werden der Hülsenansatz, der Flansch sowie der aus den gestauchten Endwellen bestehende Block miteinander verschweißt.

Die Herstellung dieser bekannten Verbindung ist recht aufwendig. Das Stauchen der Endwellen läßt sich wegen des elastischen Anteils an der Verformung nicht so durchführen, daß anschließend die Büchse problemlos eingeführt und mit der Hülse verschweißt werden kann. Um das Stauchen der Endwellungen vollständig durchzuführen, sind erhebliche Kräfte erforderlich, die nur mit einer besonderen Vorrichtung aufgebracht werden können. Ein weiterer Nachteil ist, daß eine Verschweißung erforderlich ist. Vielfach ist aus den verschiedensten Gründen ein Schweißen nicht möglich. Für Wellrohre aus Edelstahl läßt sich das bekannte Verfahren nicht anwenden, da ein Spülen mit Schutzgas, welches zur Vermeidung korrosionsfördernder Anlauffarben unumgänglich ist, nicht vorgesehen und auch im Schweißverbindungsbereich zwischen dem Block, der Hülse und dem Flansch nicht möglich ist. Darüberhinaus bereitet die exakte Abdichtung wegen des wendelförmigen Verlaufs der Wellung und der bei schraubenlinienförmig gewellten Rohren exzentrischen Lage der Schnittfläche erhebliche Schwierigkeiten.

Der vorliegenden Erfindung liegt von daher die Aufgabe zugrunde, das bekannte Verfahren dahingehend zu verbessern, daß ein Wellrohr und eine Anschlußarmatur ohne Schweißen und ohne spezielle Kenntnisse des Montagepersonals fluiddicht und kraftschlüssig miteinander verbunden werden können.

Diese Aufgabe wird dadurch gelöst, daß gemäß der Erfindung zumindest über zwei Wellengänge in das Innere des Wellrohres ein Dichtungselement eingebracht und das Dichtungselement beim Stauchen der Wellung verformt und gegen die Innenwandung der Hülse und den in das Wellrohrende eingedrungenen Ansatz der Büchse gepreßt wird.

Neben den sich aus der Aufgabenstellung von selbst ergebenden Vorteilen, weist das erfindungsgemäße Verfahren den Vorteil auf, daß das Stauchen der Wellung und das Verformen der Dichtungselemente beim Verbinden der Büchse mit der Hülse erfolgt. Zu diesem Zweck werden nach einer besonders vorteilhaften Weiterbildung der Erfindung die Hülse und die Büchse über ein Schraubgewinde verbunden.

Zusätzlich zu dem in der Wellung gelegenen Dichtungselement kann ein Dichtungselement auf den Ansatz der Büchse aufgebracht werden, gegen welches das Wellrohrende beim Verbinden von Hülse und Büchse gepreßt wird. Diese Dichtung dient als zusätzliche Sicherung, falls unerwarteterweise doch das in dem Wellrohr transportierte Medium durch die in der Wellung befindliche Dichtung hindurchtritt.

Die Erfindung betrifft weiterhin eine Anschlußarmatur, die nach dem beschriebenen Verfahren hergestellt ist. Diese Anschlußarmatur, z. B. eine Verbindungsanordnung, eine Anschlußanordnung an ein Aggregat etc, unterscheidet sich von der eingangs erwähnten Armatur durch folgende Merkmale:

a) die Hülse weist an ihrem dem Gewindegang abgekehrten Ende einen vergrößerten Innendurchmesser auf,

b) im Bereich des vergrößerten Innendurchmessers ist ein Gewinde angebracht,

c) die Büchse weist an ihrer äußeren Oberfläche ein dem Innengewinde der Hülse entsprechendes Gewinde auf,

d) an dem dem Wellrohrende zugekehrten Ende besitzt die Büchse einen in das Wellrohrende eindringenden Ansatz,

e) zwischen dem Ansatz und dem Wellrohr ist ein Dichtungselement angeordnet, welches in längsaxialer Richtung gestaucht ist und den durch die Wellung und den Ansatz gebildeten Raum vollständig ausfüllt.

Der Innendurchmesser der Hülse ist gegenüber dem mit dem Gewindegang versehenen Bereich der Hülse, der in etwa den gleichen Innendurchmesser aufweist wie das Wellrohr, vergrößert und entspricht mindestens dem Außendurchmesser des Wellrohres. Vorzugsweise ist er geringfügig größer. Bei dem Innengewinde und dem Außengewinde der Büchse handelt es sich um Feingewinde, d. h. solche mit geringem Vortrieb pro Umdrehung. Dies ist vorteilhaft, da das Stauchen der Wellung und das Zusammenpressen der Dichtung große Kräfte erfordert. Das Dichtungselement sollte aus einem gut verformbaren Werkstoff bestehen, der in der Lage ist, in die kleinsten Spalten einzudringen und diese abzudichten.

2

Auf dem Ansatz ist zweckmäßigerweise ein zusätzliches Dichtungselement vorgesehen, welches zwischen dem Wellrohrende und der durch den Ansatz gebildeten Schulter eingespannt ist.

Die Büchse weist an ihrem aus dem Wellrohrende herausragenden Teil Hilfsmittel zum Einschrauben in die Hülse und die Hülse Mittel zum Festhalten gegen Verdrehen auf. Diese Hilfsmittel können zwei gegenüberliegende planparallele Flächen sein, an welche ein Maulschlüssel angreift oder eine Bohrung, in die ein sogenannter Nutmutterschlüssel eingreift.

Der Werkstoff für das Dichtungselement ist zweckmäßigerweise korrosionsbeständig und leicht verformbar. Als besonders geeignet hat sich Graphit erwiesen. Bänder aus Graphit sind im Handel erhältlich und können in nahezu jede beliebige Form gebracht werden. So können aus den Bändern Drahtschnüre, Ringe, Wendeln etc. geformt werden.

Es ist nicht erforderlich, daß das Dichtungselement in Gänze aus Graphit besteht. Als zweckmäßig hat es sich erwiesen, einen wendelartig geformten Draht aus Metall oder Kunststoff mit einer Bewicklung aus dem Dichtungsmaterial zu versehen. Die Schichtdicke der Bewicklung muß jedoch so gewählt sein, daß genügend Dichtungsmaterial vorhanden ist, um die Hohlräume auszufüllen. Der Außendurchmesser der Wendel sollte in etwa dem Innendurchmesser des Wellrohres im Wellental entsprechen, so daß die bewickelte Wendel vom Ende her in das Wellrohr hineingedreht werden kann. Alternativ kann ein Strang in die Wellung eingelegt und dort festgelegt z. B. verklebt werden.

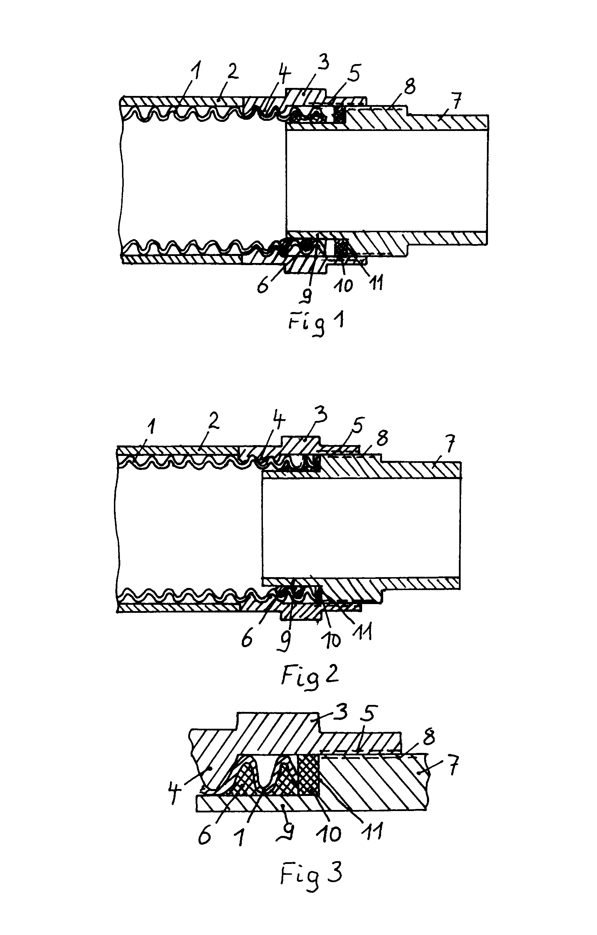

Die Erfindung ist anhand der in den Figuren 1 bis 3 schematisch dargestellten Ausführungsbeispiele näher erläutert.

Das anzuschließende Leitungsrohr besteht aus einem vorzugsweise längsnahtgeschweißten und anschließend schraubenlinienförmig gewellten Metallrohr 1, vorzugsweise aus Edelstahl. Typische Abmessungen sind beispielsweise

| Außendurchmesser | 44 mm |
| Innendurchmesser | 39 mm |
| Welltiefe | 2,1 mm |
| Wellsteigung | 10 mm |
| Wanddicke | 0,4 mm. |

Solche Rohre können in nahezu unbegrenzten Längen hergestellt und aufgrund ihrer Flexibilität auf Kabeltrommeln aufgewickelt werden.

Auf dem Wellrohr 1 kann noch ein extrudierter Kunststoffmantel 2, z. B. aus Polyethylen, angeordnet sein, der eng auf dem Wellrohr 1 aufliegt, d. h. das Profil der Wellung zeichnet sich auf dem Kunststoffmantel 2 ab. Zum Anschluß des Leitungsrohres an ein Aggregat, z. B. einen Tankanschluß, wird zunächst der Kunststoffmantel 2 vom Wellrohrende über eine bestimmte Länge entfernt. Auf das Wellrohrende wird eine Hülse 3 aufgeschraubt, die zu diesem Zweck eine der Steigung der Wellung angepaßte schraubenlinienförmige Rippe 4 aufweist. Das der Rippe 4 abgewandte Ende der Hülse 3 zeigt einen gegenüber dem Innendurchmesser im Bereich der Rippe 4 vergrößerten Innendurchmesser. Dieser Innendurchmesser ist etwas größer als der Außendurchmesser des Wellrohres 1. Er ist so zu bemessen, daß sich die beim Stauchen des Wellrohres 1 auftretende Durchmesservergrößerung des Wellrohres ungehindert ausbilden kann. Die Hülse 3 weist im Bereich des vergrößerten Innendurchmessers ein Innengewinde 5, vorzugsweise ein metrisches Gewinde, auf.

In die Wellentäler des Wellrohres 1 wird dann über mindestens zwei Wellengänge ein Dichtungselement 6, vorzugsweise eine Graphitschnur, eingebracht. Eine Büchse 7, die ein Außengewinde 8 aufweist, wird in die Hülse 3 eingeschraubt. Die Büchse 7 besitzt einen Ansatz 9, der in das Wellrohrende eindringt. Der Außendurchmesser des Ansatzes 9 ist kleiner als der Innendurchmesser des Wellrohres 1. Auch hier ist zu berücksichtigen, daß der Ansatz 9 beim Stauchen die Verringerung des Innendurchmessers des Wellrohres 1 nicht behindert. Vor dem Einschrauben wird noch ein weiteres Dichtungselement 10 auf den Ansatz 9 aufgebracht. Auch hier sollte ein Element 10 aus Graphit vorgesehen werden.

Beim fortschreitenden Einschrauben der Büchse 7 in die Hülse wird die Wellung des Wellrohres 1 allmählich gestaucht, d. h. seine Wellensteigung wird geringer, sein Innendurchmesser wird kleiner und sein Außendurchmesser wird größer. Beim Stauchprozeß werden die Dichtungselemente 6 und 10 plastisch verformt und sie dringen in alle Hohlräume zwischen dem Wellrohr 1, dem Ansatz 9, der Schulter 11, der Büchse 7 und der Hülse 3. Wesentlich ist, daß durch die Stauchung das Volumen des durch das Wellrohr 1 und den Ansatz 9 gebildeten Hohlraumes kleiner wird als das Volumen des Dichtungselementes 6. Das Dichtungselement 10 dient einer zusätzlichen Sicherung.

An der Büchse 7 sind nicht dargestellt an sich bekannte Mittel vorgesehen, um die notwendige Kraft für die Stauchung aufzubringen. Beispielsweise kann die Büchse 7 zwei planparallele Flächen aufweisen, an welche ein Maulschlüssel angreifen kann. Entsprechende Mittel sind auch an der Hülse 3 zum Aufbringen der erforderlichen Gegenkraft vorgesehen.

An dem dem Wellrohr 1 abgekehrten Ende der Büchse 7 sind an sich bekannte nicht dargestellte Mittel zum Anschließen vorgesehen, z. B. Gewinde, Flansche etc.

Die Figur 1 zeigt die Anschlußarmatur nach dem Einschrauben der Büchse 7, d. h. unmittelbar vor dem Stauchen.

Die Figur 2 zeigt die fertige Anschlußarmatur, d. h. die letzten Wellengänge sind gestaucht.

Die Figur 3 zeigt eine vergrößerte Darstellung des eigentlichen Dichtungsbereiches.

**Patentansprüche**

1.  Verfahren zum Befestigen einer Anschlußarmatur an dem Ende eines schraubenlinienförmig gewellten Metallrohres (1), bei dem auf das Ende des Wellrohres (1) eine Hülse (3) mit einem an der inneren Oberfläche angebrachten, der Steigung der Wellung des Wellrohres (1) angepaßten Gewindegang (4) aufgeschraubt, anschließend einige der Wellengänge vom Wellrohrende her gestaucht und die Hülse (3) mit einer in das Wellrohrende mit einem Ansatz (9) eindringenden Büchse (7) verbunden wird, dadurch gekennzeichnet, daß zumindest über zwei Wellengänge in das Innere des Wellrohres (1) ein Dichtungselement (6) eingebracht und das Dichtungselement (6) beim Stauchen der Wellung verformt und gegen die Innenwandung der Hülse (3) und den in das Wellrohrende eingedrungenen Ansatz (9) der Büchse (7) gepreßt wird.

2.  Verfahren nach Anspruch 1, dadurch gekennzeichnet, daß die Hülse (3) und die Büchse (7) über ein Schraubgewinde (5, 8) verbunden werden.

3.  Verfahren nach Anspruch 1 oder 2, dadurch gekennzeichnet, daß auf dem in das Wellrohrende eindringenden Ansatz (9) der Büchse (7) ein Dichtungselement (10) aufgebracht wird, gegen welches das Wellrohrende beim Verbinden von Hülse (3) und Büchse (7) gepreßt wird.

4.  Anschlußarmatur, hergestellt nach einem der Ansprüche 1 bis 3, bestehend aus einer auf das Wellrohr (1) mittels eines der Wellung des Wellrohres (1) entsprechenden Gewindeganges (4) aufgeschraubten Hülse (3), einer in das Wellrohrende zum Teil eingedrungenen Büchse (7), die mit der Hülse (3) mechanisch fest verbunden ist und einer Abdichtung zwischen Hülse (3) und Büchse (7) durch Stauchung einiger Wellungen des Wellrohrendes, wobei die Büchse (7) an ihrem dem Wellrohrende abgekehrten Ende Mittel zum Anschließen der Büchse an ein Aggregat o. ä. aufweist, gekennzeichnet durch folgende Merkmale:
    a) die Hülse (3) weist an ihrem dem Gewindegang abgekehrten Ende einen vergrößerten Innendurchmesser auf,
    b) im Bereich des vergrößerten Innendurchmessers ist ein Gewinde (5) angebracht,
    c) die Büchse (7) weist an ihrer äußeren Oberfläche ein dem Innengewinde der Hülse (3) entsprechendes Gewinde (8) auf,
    d) an dem dem Wellrohrende zugekehrten Ende besitzt die Büchse (7) einen in das Wellrohrende eindringenden Ansatz (5),
    e) zwischen dem Ansatz (9) und dem Wellrohr (1) ist ein Dichtungselement (6) angeordnet, welches in längsaxialer Richtung gestaucht ist und den durch die Wellung und den Ansatz (9) gebildeten Raum vollständig ausfüllt.

5.  Anschlußarmatur nach Anspruch 4, dadurch gekennzeichnet, daß auf dem Ansatz (9) ein zusätzliches Dichtungselement (10) vorgesehen ist, welches zwischen dem Wellrohrende und der durch den Ansatz (9) gebildeten Schulter (11) eingespannt ist.

6.  Anschlußarmatur nach Anspruch 4 oder 5, dadurch gekennzeichnet, daß die Büchse (7) an ihrem aus dem Wellrohrende herausragenden Teil Hilfsmittel zum Einschrauben in die Hülse (3) und die Hülse (3) Mittel zum Festhalten gegen Verdrehen aufweist.

7.  Anschlußarmatur nach einem der Ansprüche 4 bis 6, dadurch gekennzeichnet, daß das Dichtungselement (6, 10) aus einem korrosionsbeständigen leichtverformbaren Werkstoff, vorzugsweise aus Graphit, besteht.

8. Anschlußarmatur nach einem der Ansprüche 4 bis 7, dadurch gekennzeichnet, daß das Dichtungselement (6, 10) aus einem wendelartig geformten Draht aus Metall oder Kunststoff besteht, der mit dem leicht verformbaren Werkstoff bewickelt ist.

9. Anschlußarmatur nach einem der Ansprüche 4 bis 7, dadurch gekennzeichnet, daß das Dichtungselement (6, 10) ein Strang aus dem leicht verformbaren Werkstoff ist, welcher in die Wellengänge eingelegt und dort festgelegt ist.

Fig 1

Fig 2

Fig 3